# FASCICULE DE BREVET EUROPEEN

(11) **EP 1 183 644 B1**
(45) Date de publication et mention de la délivrance du brevet: **22.08.2007**
(21) Numéro de dépôt: 00985345.8
(22) Date de dépôt: 28.11.2000
(51) Int. Cl.: G06K 19/077

(54) **PROCEDE DE FABRICATION D'UNE CARTE A PUCE HYBRIDE CONTACT-SANS CONTACT AVEC UN SUPPORT D'ANTENNE EN MATERIAU FIBREUX**
VERFAHREN ZUR HERSTELLUNG EINER KONTAKTLOSEN HYBRIDEN CHIPKARTE MIT EINEM ANTENNENTRÄGER AUS FASERMATERIAL
METHOD FOR MAKING A NON-CONTACT HYBRID SMART CARD WITH AN ANTENNA SUPPORT MADE OF FIBROUS MATERIAL

(30) Priorité: 29.11.1999 FR 9915018
(43) Date de publication de la demande: 06.03.2002
(73) Titulaire: ASK S.A., 06560 Valbonne (FR)
(72) Inventeur: KAYANAKIS, Georges, F-06000 Antibes (FR); MATHIEU, Christophe, F-27950 Saint-Marcel (FR); DELENNE, Sébastien, F-13530 Trets (FR)
(86) Numéro de dépôt international: PCT/FR2000/003322
(87) Numéro de publication internationale: WO 2001/041061

(56) Documents cités:
- EP-A- 0 615 285
- DE-C- 19 632 115
- US-A- 5 969 951

## Description

### Domaine technique

La présente invention concerne les procédés de fabrication de cartes à puce, et plus particulièrement un procédé de fabrication d'une carte à puce sans contact dont l'antenne est sur un support en matériau fibreux tel que le papier.

### Etat de la technique :

La carte à puce sans contact est un système de plus en plus utilisé dans différents secteurs. Ainsi, dans le secteur des transports, elle a été développées comme moyen de paiement. C'est le cas également du porte-monnaie électronique. De nombreuses sociétés ont également développé des moyens d'identification de leur personnel par cartes à puce sans contact.

L'échange d'informations entre une carte hybride contact - sans contact et le dispositif de lecture associé s'effectue par couplage électromagnétique à distance entre une antenne logée dans la carte sans contact et une deuxième antenne située dans le lecteur ou directement par contact avec le lecteur. Pour élaborer, stocker et traiter les informations, la carte est munie d'un module électronique, qui est relié à l'antenne. Une telle carte est décrite dans le document US-A-5969951. L'antenne se trouve généralement sur un support diélectrique en matière plastique. Le procédé de fabrication industrielle classique se décompose en trois étapes :
- réalisation de l'antenne sur un support diélectrique plastique (polychlorure de vinyle (PVC), polyesters (PET), polycarbonate (PC)...) par gravure chimique du cuivre ou de l'aluminium,
- lamination sous pression à chaud des couches plastiques inférieure et supérieure du corps de carte (PVC, PET, PC, acrylonitrile-butadiène-styrène (ABS)...), sur le support de l'antenne afin de former une carte monobloc,
- mise en place et connexion d'un module électronique par collage conducteur.

Toutefois, ce procédé engendre plusieurs inconvénients majeurs. En effet, il conduit à un empilage composite de matériaux plastiques collés ou thermosoudés avec des coefficients de dilatation thermique différents. Par conséquent, on observe systématiquement des déformations irréversibles des cartes (vrillage, gauchissement) inacceptables par l'utilisateur, ainsi qu'un manque de tenue mécanique lors de l'application d'essais normalisés ou équivalents.

De plus, les propriétés thermomécaniques du PVC sont médiocres. Lors de la lamination, le fluage de matière est très important et le facteur de forme de l'antenne n'est pas conservé. Cela entraîne un dysfonctionnement de l'antenne car les paramètres électriques (inductance et résistance) varient. Il n'est pas rare d'observer des coupures d'antenne aux endroits où les contraintes de cisaillement sont fortes. C'est le cas notamment dans les angles ou au niveau des pontages électriques.

L'épaisseur totale des cartes ISO laminées varie entre 780 et 840 µm. Compte tenu des flux de matière décrits précédemment, il est également très difficile de garantir aux clients une distribution étroite et contrôlée de la population.

La thermosoudure plastique mise en oeuvre au moment de la lamination conduit à une carte monobloc dont les propriétés mécaniques sont médiocres en terme de restitution des contraintes absorbées : lors des tests normalisés de flexion et de torsion, la totalité de la contrainte imposée est transmise au module électronique et plus particulièrement aux points de colle assurant les connexions. La tenue mécanique des joints de colle est soumise à rude épreuve et la moindre imperfection au collage se traduit par une rupture de la connexion module - antenne.

Après lamination, l'empreinte des pistes de cuivre est visible sur les corps de carte imprimés. Sans conséquence pour le bon fonctionnement de la carte, ce défaut est très souvent mis en avant par les utilisateurs très sensibles aux critères esthétiques.

De plus, les coûts de fabrication de carte par ce procédé sont trop élevés pour permettre un réel accroissement de leur utilisation.

Enfin, les procédés actuellement utilisés ne permettent pas d'obtenir des cartes donnant la possibilité de visualiser a posteriori les mauvais traitements mécaniques qui leur sont infligés par les utilisateurs, notamment dans le but de frauder. En effet, il est relativement aisé pour un fraudeur averti de détruire la carte par pliages intensifs répétés sans que l'on puisse facilement prouver a posteriori l'intention de nuire. Par exemple, l'antenne peut être coupée sans que la carte soit marquée. Les politiques commerciales mises alors en place par les sociétés consistent généralement à remplacer gratuitement les cartes défectueuses. Le remplacement systématique de ces cartes génère des coûts supplémentaires importants pour ces sociétés.

Le document FR-A-2769440 décrit une carte à puce avec un support d'antenne en papier.

### Exposé de l' invention :

Le but de l'invention est de pallier à ces inconvénients en fournissant un procédé de fabrication inventif permettant d'utiliser un support en matière fibreuse sur lequel est réalisée l'antenne par sérigraphie d'encre conductrice, ce qui permet de diminuer fortement les coûts de production des cartes à puce sans contact ou hybrides.

L'invention concerne donc un procédé de fabrication d'une carte à puce hybride contact - sans contact avec un support d'antenne en matière fibreuse tel que le papier comprenant les étapes suivantes :
une étape de fabrication de l'antenne consistant à sérigraphier des spires d'encre polymère conductrice sur un support en matière fibreuse et à faire subir un traitement thermique au support afin de cuire l'encre,
une étape de lamination des corps de carte sur le support de l'antenne consistant à souder de chaque côté du support au moins deux feuilles en matière plastique, constituant les corps de carte, par pressage à chaud,
une étape de fraisage des cavités consistant à percer, dans un des corps de carte, une cavité permettant de loger le module constitué par la puce et le circuit double face, la cavité comprenant une portion interne plus petite, recevant la puce et une portion externe plus grande recevant le circuit double face, la cavité étant creusée dans le corps de carte qui est opposé à la face du support portant l'encre conductrice sérigraphiée constituant l'antenne, et le fraisage permettant de dégager les plots de connexion de la puce, et
une étape d'insertion du module consistant à utiliser une colle permettant de fixer le module et une colle contenant de l'argent permettant de connecter le module aux plots de connexion, et à le positionner dans la cavité prévue à cet effet.

### Description brève des figures :

Les buts, objets et caractéristiques ressortiront mieux à la lecture de la description qui suit faite en référence aux dessins joints dans lesquels :
Les figures 1A à 1C représentent les différentes étapes de la sérigraphie de l'antenne sur le support.
La figure 2 représente le support avec l'antenne sérigraphiée au verso avant l'étape de lamination.
La figure 3 représente la carte à puce à la fin du procédé de fabrication.
La figure 4 représente une coupe transversale de la carte à puce, représentée sur la figure 3, selon l'axe A-A de la figure 3.

### Description détaillée de l'invention :

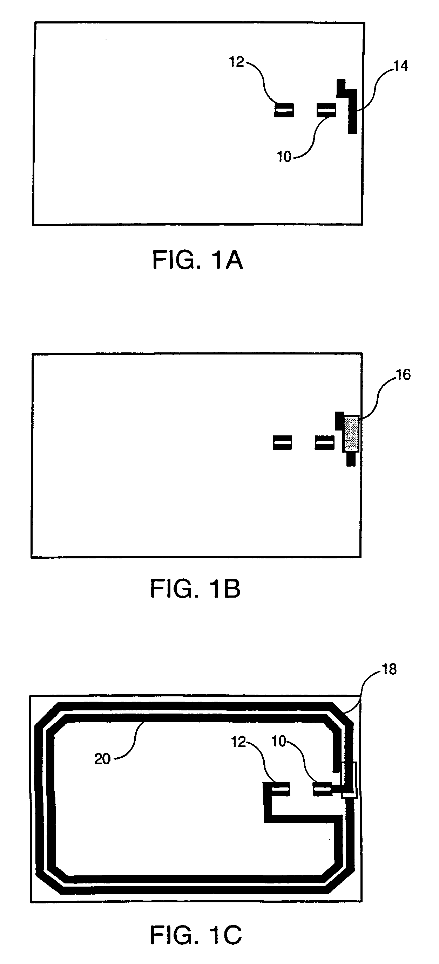

Le procédé de fabrication de la carte à puce selon l'invention consiste tout d'abord à réaliser l'antenne sur un support. Ce support est réalisé sur une feuille de matériau fibreux tel que le papier. Selon un mode préféré de réalisation, l'antenne est sérigraphiée sur ce matériau en plusieurs étapes et à rebours par rapport au procédé classique de sérigraphie. En effet, la première étape représentée à la figure 1A, consiste à sérigraphier les deux plots de connexion 10 et 12 de l'antenne au module et le pont électrique 14, appelé communément « cross-over », permettant de connecter les deux spires en série. La deuxième étape de sérigraphie représentée à la figure 1B consiste à sérigraphier une bande isolante 16 superposée au cross-over. La troisième et dernière étape de sérigraphie consiste à sérigraphier les deux spires 18 et 20. Une extrémité de la spire 18 est reliée au plot de connexion 10 et l'autre extrémité au cross-over 14. La spire 20 est sérigraphiée à partir du cross-over 14 jusqu'au plot de connexion 12.

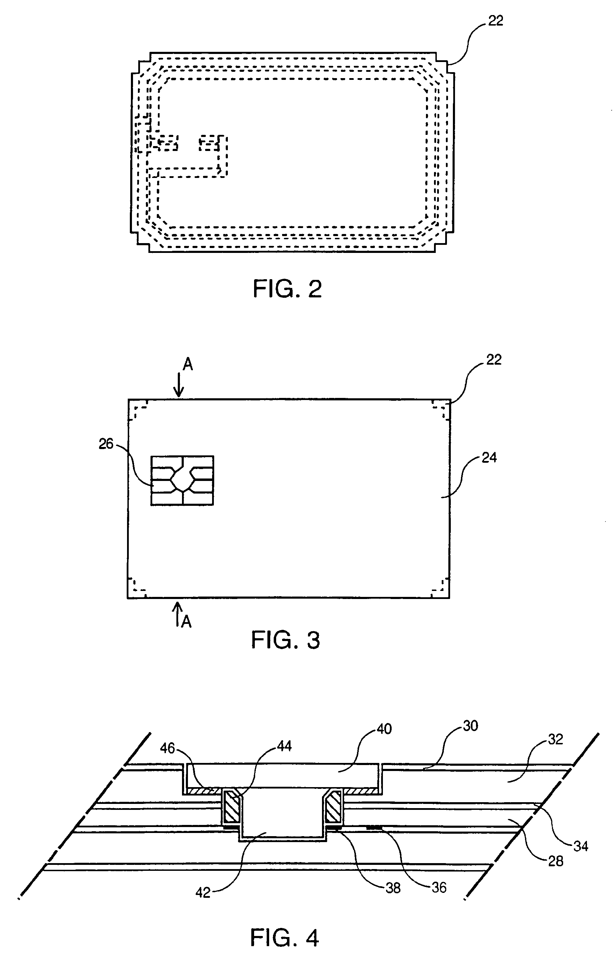

Une fois l'antenne sérigraphiée sur le support, celui-ci est découpé aux dimensions de la carte. Selon un mode de réalisation préféré, on réalise alors une découpe 22 dans chaque coin du support, telle que représentée à la figure 2. Cette découpe permet une soudure directe entre les corps de carte lors de l'étape de lamination.

La lamination se fait par pressage à chaud. Selon un mode de réalisation préféré, on utilise pour chaque corps de carte deux couches de matière plastique. Cette matière plastique est généralement du polychlorure de vinyle (PVC), du polyester (PET, PETG), du polycarbonate (PC) ou de l'acrylonitrile-butadiène-styrène (ABS). Selon un mode de réalisation préféré, on utilise du PVC. Les deux couches sont de rigidité différente. En effet, la couche externe est en PVC rigide, alors que la couche interne (en contact avec le support de l'antenne) est en PVC mou avec un point Vicat inférieur (température à partir de laquelle le PVC passe d'un état rigide à un état caoutchouteux). Les deux couches peuvent être également d'épaisseur différente. Par exemple, chacun des corps de carte est constitué d'une couche externe de PVC rigide d'environ 310 microns (µm) et d'une couche interne de PVC mou d'environ 80 µm. Le support de l'antenne est en papier et a une épaisseur d'environ 125 µm. Selon un autre exemple de réalisation, qui est un mode réalisation préféré, chacun des corps de carte est constitué de trois couches. En effet, une couverture, constituée d'une feuille en PVC transparent ou d'une couche de vernis, est ajoutée sur la couche externe des corps de carte lorsque celle-ci est imprimée pour protéger cette impression. Cette couverture a une épaisseur d'environ 40 µm, la couche externe du corps de carte a alors une épaisseur d'environ 275 µm et la couche interne une épaisseur d'environ 40 µm.

L'étape de lamination consiste à empiler les différentes couches de PVC constituant les corps de carte et le support d'antenne. Ce sandwich est ensuite placé dans une presse à laminer. Le sandwich subit alors un traitement thermique à une température supérieure à 100 °C mais préférentiellement supérieure à 150 °C. En même temps, le sandwich subit un pressage afin de souder les différentes couches. Sous l'action combinée de la chaleur et de la pression, la couche externe de PVC se ramollit, alors que la couche interne constituée d'un PVC de point Vicat plus bas se fluidifie. Le PVC ainsi fluidifié vient emprisonner l'encre sérigraphiée de l'antenne dans la masse, ce qui permet à cette dernière d'avoir une meilleure résistance aux contraintes mécaniques lors de l'utilisation de la carte à puce. De plus, l'adhérence de l'antenne sur les corps de carte est meilleure. Cette adhérence peut encore être améliorée par l'utilisation d'un adhésif double face sensible à la pression, placé entre les corps de carte et l'antenne.

Les découpes 22 réalisées dans les coins du support d'antenne permettent aux deux couches interne de PVC d'être en contact l'une avec l'autre. En bloquant les coins par soudure entre les deux corps de carte, toutes les contraintes mécaniques sont transmises à l'intérieur de la carte. Or, dans le cas du papier, la pâte à papier possède une faible cohésion interne. Lorsqu'elle est soumise à des contraintes de cisaillement, l'âme du papier a tendance à se délaminer. Si ces contraintes sont trop fortes, la carte s'ouvre jusqu'à la séparation en deux parties (la partie qui contient l'antenne connectée au module continue de fonctionner). Ainsi, en jouant sur la nature du papier et sur sa cohésion interne, on peut mettre à profit cette propriété physique pour créer une carte avec marqueur de contraintes modulable et intégré. Ainsi, selon les besoins du client, la délamination peut être plus ou moins rapide et plus ou moins importante, de manière à ce * qu'une flexion limitée de la carte puisse être visualisée par une délamination du papier à l'intérieur de celle-ci.

L'étape suivante consiste à fraiser une cavité qui reçoit le module constitué de la puce et du circuit double face. Le fraisage permet également de dégager les plots de connexion de l'antenne avec le module. Afin de ne pas endommager l'impression sérigraphique de l'antenne, le fraisage est réalisé dans le corps de carte qui est opposé à la face du support d'antenne portant l'impression sérigraphique, c'est à dire dans le corps de carte qui est en contact avec la face du support ne portant pas la sérigraphie de l'antenne. Ainsi, lors du fraisage, le support d'antenne est fraisé avant l'encre. De plus, celle-ci étant prise en masse dans le PVC de la couche interne du corps de carte, elle ne subit aucuns dommages tels que fissures ou dilacérations. Dans le cas de carte à puce au format ISO pour lesquelles l'emplacement de la puce sur la carte est normalisé, l'impression sérigraphique inversée de l'antenne sur le support et le fraisage de la cavité dans le corps de carte qui est en contact avec la face du support ne portant pas la sérigraphie, permettent d'installer le module à l'emplacement normalisé, tout en préservant l'intégrité de l'antenne sérigraphiée.

L'installation du module se fait par collage. Deux colles différentes sont utilisées. La première colle est une colle conductrice qui permet de connecter le module aux plots de l'antenne. Cette colle est préférentiellement une colle contenant de l'argent. La deuxième colle utilisée est une colle qui scelle le module à la carte. Selon un mode de réalisation particulier, on utilise une colle cyanoacrylate. Il est également possible d'utiliser une colle « hot-melt » en film qui est placée sous le module avant son insertion dans la carte. Une fois cette étape achevée, on obtient une carte telle que représentée à la figure 3. Les corps de carte 24 sont thermosoudés entre eux dans les coins, là où on été réalisées les découpes 22 sur le support d'antenne. Le module 26 se retrouve à l'emplacement normalisé pour les cartes à puce de type ISO.

La figure 4 est une vue en coupe transversale selon l'axe A-A de la carte à puce représentée à la figure 3. La carte est constituée du support d'antenne 28 en matériau fibreux, inséré entre les deux corps de carte. Chaque corps de carte comprend une couverture 30, constituée d'une feuille de PVC transparent ou d'une couche de vernis, une couche externe de PVC rigide 32 et une couche interne de PVC mou 34. La spire 36 et les plots de connexion 38 sont emprisonnés dans la masse du PVC de la couche interne 34 du corps de carte. La cavité réalisée par fraisage dans le corps de carte opposé à la face du support portant l'antenne reçoit le circuit double face 40 et la puce 42 protégée par une résine de surmoulage (non représentée). Le module est connecté aux plots de l'antenne 38 par une couche de colle conductrice chargée argent 44. Une couche de colle cyanoacrylate 46 permet de fixer le module à la carte.

Le procédé selon l'invention permet d'obtenir une carte qui possède deux qualités majeures pour les sociétés qui l'utilisent : la préservation des composantes électriques confère à cette carte une solidité plus importante et la propriété de délamination des matériaux fibreux tels que le papier permet, en cas de panne de la carte, de vérifier que la carte n'a pas subi de pliages intensifs dans le but de frauder.

## Revendications

1. Procédé de fabrication d'une carte à puce hybride contact - sans contact avec un support d'antenne (28) en matière fibreuse tel que le papier comprenant les étapes suivantes :
une étape de fabrication de l'antenne (36) consistant à sérigraphier des spires d'encre polymère conductrice sur un support en matière fibreuse et à faire subir un traitement thermique audit support afin de cuire ladite encre, **caractérisé par** :
une étape de lamination des corps de carte sur le support de l'antenne consistant à souder de chaque côté dudit support au moins deux feuilles en matière plastique (30, 32, 34) constituant les corps de carte, par pressage à chaud,
une étape de fraisage des cavités consistant à percer, dans un des corps de carte, une cavité permettant de loger le module constitué par une puce et un circuit double face (40) ladite cavité comprenant une portion interne plus petite, recevant la puce et une portion externe plus grande recevant le circuit double face, ladite cavité étant creusée dans le corps de carte qui est opposé à la face du support portant l'encre conductrice sérigraphiée constituant l'antenne, et ledit fraisage permettant de dégager les plots de connexion (38) de la puce (47) et
une étape d'insertion du module consistant à utiliser une colle (46) permettant de fixer ledit module et une colle (44) contenant de l'argent permettant de connecter ledit module auxdits plots de connexion, et à positionner ledit module dans la cavité prévue à cet effet.

2. Procédé de fabrication d'une carte à puce selon la revendication 1, dans lequel les deux feuilles constituant chacun des corps de carte de chaque côté dudit support d'antenne en matière fibreuse sont de rigidité différente.

3. Procédé de fabrication d'une carte à puce selon la revendication 1 ou 2, dans lequel, durant l'étape de fabrication de l'antenne, les coins du support d'antenne (22) en papier sont découpés afin de permettre la soudure entre les deux corps de carte, ladite carte ainsi obtenue offrant ainsi une zone préférentielle de délamination, permettant de mettre en évidence a posteriori un acte de dégradation volontaire.

4. Procédé de fabrication d'une carte à puce selon l'une des revendications précédentes, dans lequel l'étape de fabrication de l'antenne est réalisée à l'envers et consiste à :
Sérigraphier sur le support deux plots de connexion (10, 12) de l'antenne au module et un cross-over (14) avec une encre polymère,
sérigraphier sur le support une bande isolante (16) superposée au cross-over avec une encre diélectrique,
sérigraphier sur le support au moins deux spires (18, 20) de l'antenne avec une encre polymère, ces deux spires ayant une de leurs extrémités en contact avec un plot de connexion différent, et l'autre extrémité en contact avec le cross-over, ce qui permet d'obtenir une antenne avec deux spires en série.

5. Procédé de fabrication d'une carte à puce selon la revendication 2 à 4, dans lequel la feuille constituant la couche externe (32) des corps de carte est plus rigide que la feuille constituant la couche interne (34) des corps de carte, ladite couche interne possédant un bas point Vicat.

6. Procédé de fabrication d'une carte à puce selon l'une des revendication précédentes, dans lequel les deux feuilles constituant chacun des corps de carte de chaque côté dudit support d'antenne en matière fibreuse sont d'épaisseur différente.

7. Procédé de fabrication d'une carte à puce selon la revendication 6, dans lequel la feuille constituant la couche externe est plus épaisse que la feuille constituant la couche interne.

8. Procédé de fabrication d'une carte à puce selon l'une des revendication précédentes, dans lequel durant l'étape de lamination des corps de carte à chaud sur le support de l'antenne, on ajoute une troisième feuille en matière plastique ou une couche de vernis à chaque corps de carte, jouant le rôle de couverture (30).

9. Procédé de fabrication d'une carte à puce selon l'une des revendications précédentes, **caractérisé en ce que** la matière plastique constituant les corps de carte est le polychlorure de vinyle (PVC), du polyester (PET, PETG), du polycarbonate (PC) ou de l'acrylonitrile-butadiène-styrène (ABS).

10. Procédé de fabrication d'une carte à puce selon l'une des revendications précédentes dans lequel la colle utilisée pour fixer le module est une colle cyanoacrylate fluide, qui est appliquée dans les cavités avant l'insertion dudit module.

11. Procédé de fabrication d'une carte à puce selon l'une des revendications 1 à 9, dans lequel la colle utilisée pour fixer le module est une colle « hot melt » en film qui est placée sous le module avant son insertion dans la carte.

## Claims

1. A manufacturing process of a hybrid contact-contactless smart card with an antenna support (28) made of fibrous material such as the paper, including the following steps:
a manufacturing process of the antenna (36) consisting in screen printing turns of electrically conductive polymer ink on a support made of fibrous materials and to subject said support to a heat treatment in order to bake said ink **characterized in**,
a step for laminating the card body onto the antenna support consisting in welding on each side of said support at least two sheets of plastic material (30, 32, 34), forming the card bodies, by hot press molding,
a cavity milling step consisting in piercing, in one of the card bodies, a cavity for housing the module comprised of a chip and a double-sided circuit (40), said cavity including a smaller internal portion which receives the chip and a larger external portion for receiving the double-sided circuit, said cavity including a smaller internal portion which receives the chip and a larger external portion for receiving the double-sided circuit, said cavity being dug into the card body which is opposite the side of the support featuring the electrically conductive screen printed ink which forms the antenna, and the milling operation enabling the connection pads (38) to be removed from the chip (42), and
a module insertion step consisting in using a glue (46) enabling said module to be secured and a glue (44) containing silver for connecting said module to said connectors, and to position said module in the cavity provided to this end.

2. The smart card manufacturing process according to claim 1, in which the two sheets each forming card bodies on each side of said antenna support made of fibrous material have different stiffness.

3. A smart card manufacturing process according to claim 1 or 2, in which, during the antenna manufacturing process, the corners (22) of the paper antenna support are notched in order to allow the two card bodies to be welded together; said card obtained thereby offering a preferential delamination zone which will highlight any act of deliberate damage a posteriori.

4. A smart card manufacturing process according to one of the previous claims, in which the antenna manufacturing step is conducted in reverse order and consists in:
Screen printing with a polymer ink, on the support, two antenna contacts (10, 12) for the module and a cross-over (14),
Screen printing with dielectric ink, on the support, an insulating strip (16) on top of the cross-over,
Screen printing with polymer ink, on the support, at least two turns (18, 20) for the antenna, these turns having there ends in contact with a different connecting pad and the other end in contact with the cross-over, enabling an antenna with two turns in series to be obtained.

5. A smart card manufacturing process according to claims 2 through 4, in which the sheet forming the outer layer (32) of the card body is more rigid than the sheet forming the internal layer (34) of the card bodies, said internal layer having a low Vicat softening temperature.

6. A smart card manufacturing process according to one of the previous claims, in which the two sheets forming the card bodies on each side of said antenna support made of fibrous material are of different thickness.

7. The smart card manufacturing process according to claim 6, in which the sheet forming the external layer is thicker than the sheet forming the internal layer.

8. A process for manufacturing a smart card according to one of the previous claims, in which, during the hot lamination step of the card bodies onto the antenna support, a third sheet of plastic material or varnish layer is added to each card body which acts as a cover (30).

9. A smart card manufacturing process according to one of the previous claims, **characterized in that** the plastic materials forming the card bodies is polyvinyl chloride (PVC), polyester (PET, PETG), polycarbonate (PC) or acrylonitrile-butadiene-styrene (ABS).

10. A smart card manufacturing process according to one of the previous claims in which the glue used to secure the module is a fluid cyanoacrylate adhesive, which is placed in the cavities prior to the insertion of said module.

11. A smart card manufacturing process according to one of the claims 1 through 9, in which the glue used to secure the module is a film-type "hot melt" adhesive which is placed under the module prior to its insertion in the card.

## Patentansprüche

1. Verfahren zur Fertigung einer hybriden kontaktbehafteten-kontaktlosen Chipkarte mit einem Antennenträger (28), aus faserigem Material, wie etwa Papier, das die folgenden Schritte umfasst:
einen Schritt der Fertigung der Antenne (36), der darin besteht, im Siebdruckverfahren Windungen elektrisch leitender Polymertinte auf einen Träger aus faserigem Material aufzutragen und den Träger einer thermischen Behandlung zu unterziehen, um die Tinte zu brennen, **gekennzeichnet durch**:
einen Schritt des Laminierens der Kartenkörper auf den Antennenträger, der darin besteht, auf jede Seite des Trägers mindestens zwei Blätter aus Plastikmaterial (30, 32, 34), die die Kartenkörper bilden, **durch** Heißpressen zu schweißen,
einen Schritt des Fräsens von Hohlräumen, der darin besteht, in einen der Kartenkörper, einen Hohlraum zu bohren, der es ermöglicht, das Modul unterzubringen, das aus einem Chip und einem doppelseitigen Schaltkreis (40) gebildet wird, wobei der Hohlraum einen kleineren inneren Abschnitt, der den Chip aufnimmt, und einen größeren äußeren Abschnitt, der den doppelseitigen Schaltkreis aufnimmt, umfasst, wobei der Hohlraum in dem Kartenkörper ausgehöhlt ist, der gegenüber der Seite des Trägers liegt, die die im Siebdruckverfahren aufgebrachte leitende Tinte trägt, die die Antenne bildet, und wobei es die Fräsung ermöglicht, die Verbindungspads (38) von den Chips (43) abzulösen, und
einen Schritt des Einfügens des Moduls, der darin besteht, einen Klebstoff (46) zu verwenden, der es ermöglicht, das Modul zu fixieren und einen Klebstoff (44), der Silber enthält, der es ermöglicht, das Modul mit den Verbindungspads zu verbinden, und das Modul in dem für diesen Zweck vorgesehenen Hohlraum zu positionieren.

2. Verfahren zur Fertigung einer Chipkarte nach Anspruch 1, wobei die beiden Blätter, die jeweils den Kartenkörper auf jeder Seite des Antennenträgers aus faserigem Material bilden, von unterschiedlicher Steifigkeit sind.

3. Verfahren zur Fertigung einer Chipkarte nach Anspruch 1 oder 2, wobei, während des Schritts der Fertigung der Antenne, die Ecken des Antennenträgers (22) aus Papier eingekerbt werden, um das Verschweißen der beiden Kartenkörper zu ermöglichen, wobei die so erhaltene Karte so eine Zone der bevorzugten Delamination bietet, die es ermöglicht, a posteriori einen Akt der vorsätzlichen Beschädigung zu markieren.

4. Verfahren zur Fertigung einer Chipkarte nach einem der vorhergehenden Ansprüche, wobei der Schritt der Fertigung der Antenne in umgekehrter Reihenfolge ausgeführt wird, und darin besteht:
im Siebdruckverfahren auf den Träger zwei Antennen-Verbindungspads (10, 12) für das Modul und einen Crossover (14) mit einer Polymertinte aufzubringen,
im Siebdruckverfahren mit einer dielektrischen Tinte ein Isolierband (16) über dem Crossover auf den Träger aufzubringen,
im Siebdruckverfahren auf den Träger mindestens zwei Windungen (18, 20) der Antenne mit einer Polymertinte aufzubringen, wobei diese beiden Windungen eines ihrer Enden mit einem unterschiedlichen Verbindungspad in Kontakt haben, und das andere Ende mit dem Crossover in Kontakt haben, was es ermöglicht, eine Antenne mit zwei Windungen nacheinander zu erhalten.

5. Verfahren zur Fertigung einer Chipkarte nach Anspruch 2 bis 4, wobei das Blatt, das die äußere Schicht (32) der Kartenkörper bildet, steifer ist als das Blatt, das die innere Schicht (34) der Kartenkörper bildet, wobei die innere Schicht eine niedrige Vicat-Zahl besitzt.

6. Verfahren zur Fertigung einer Chipkarte nach einem der vorhergehenden Ansprüche, wobei die beiden Blätter, die jeweils die Kartenkörper auf jeder Seite des Antennenträgers aus faserigem Material bilden, von unterschiedlicher Dicke sind.

7. Verfahren zur Fertigung einer Chipkarte nach Anspruch 6, wobei das Blatt, das die äußere Schicht bildet, dicker ist als das Blatt, das die innere Schicht bildet.

8. Verfahren zur Fertigung einer Chipkarte nach einem der vorhergehenden Ansprüche, wobei während des Schritts der Heißlamination der Kartenkörper auf den Antennenträger, ein drittes Blatt aus Plastikmaterial, oder jedem Kartenkörper eine Lackschicht zugefügt wird, die als Überzug (30) dient.

9. Verfahren zur Fertigung einer Chipkarte nach einem der vorhergehenden Ansprüche, **dadurch gekennzeichnet, dass** das Plastikmaterial, das die Kartenkörper bildet Polyvinylchlorid (PVC), Polyester (PET, PETG), Polycarbonat (PC) oder Acrylnitril-Butadien-Styrol (ABS) ist.

10. Verfahren zur Fertigung einer Chipkarte nach einem der vorhergehenden Ansprüche, wobei der Klebstoff, der verwendet wird, um das Modul zu fixieren, ein flüssiger Cyanoacrylatklebstoff ist, der in den Hohlräumen aufgetragen wird, bevor das Modul eingefügt wird.

11. Verfahren zur Fertigung einer Chipkarte nach einem der Ansprüche 1 bis 9, wobei der Klebstoff, der verwendet wird, um das Modul zu fixieren, ein filmartiger Heißschmelzklebstoff ist, der unter dem Modul platziert wird, bevor dieses in die Karte eingefügt wird.
